# EUROPÄISCHE PATENTSCHRIFT

(11) **EP 0 846 235 B1**
(45) Veröffentlichungstag und Bekanntmachung des Hinweises auf die Patenterteilung: **26.02.2003**
(21) Anmeldenummer: 96930970.7
(22) Anmeldetag: 28.08.1996
(51) Int. Cl.: F16H 61/04, F16H 61/08

(54) **VERFAHREN ZUM BETREIBEN EINES FAHRZEUGGETRIEBES UND STEUER- BZW. REGELSYSTEM ZUR DURCHFÜHRUNG DES VERFAHRENS**
METHOD OF OPERATING A VEHICLE TRANSMISSION AND CONTROL SYSTEM FOR CARRYING OUT THE METHOD
PROCEDE D'ACTIONNEMENT D'UNE BOITE DE VITESSES DE VEHICULE ET SYSTEME DE COMMANDE POUR LA MISE EN OEUVRE DU PROCEDE

(30) Priorität: 29.08.1995 DE 19531675
(43) Veröffentlichungstag der Anmeldung: 10.06.1998
(73) Patentinhaber: J. M. Voith GmbH & Co. Beteiligungen KG, 89522 Heidenheim (DE)
(72) Erfinder: DEPPING, Herbert, D-89537 Giengen (DE); MAIER, Wilfried, D-89518 Heidenheim (DE); ROTTER, Erwin, D-89564 Nattheim (DE); HÄBERLE, Friedrich, D-89518 Heidenheim (DE); SCHÖNHAAR, Thomas, D-89551 Königsbronn (DE)
(74) Vertreter: Dr. Weitzel & Partner
(86) Internationale Anmeldenummer: EP9603777
(87) Internationale Veröffentlichungsnummer: WO97008479

(56) Entgegenhaltungen:
- EP-A- 0 176 750
- EP-A- 0 231 593
- EP-A- 0 350 018
- EP-A- 0 435 372
- EP-A- 0 524 450
- EP-A- 0 742 389
- EP-A- 0 751 324
- DE-A- 1 932 986
- DE-A- 3 025 054
- DE-A- 3 205 767
- US-A- 4 982 621

## Beschreibung

Die Erfindung betrifft ein Verfahren zur Steuerung eines automatischen Fahrzeuggetriebes, im einzelnen mit den beispielsweise aus der EP 0 231 593 A1 bekannten Merkmalen aus dem Oberbegriff des Anspruchs 1, ferner ein Steuer - bzw. Regelsystem zur Durchführung des Verfahrens.

Verfahren zum Betreiben bzw. zur Steuerung von automatischen Fahrzeuggetrieben sind unter anderen bereits aus den folgenden Druckschriften bekannt:
(1) DE-A 19 32 986
(2) DE-A 32 05 767
(3) EP-A 0 176 750
(4) EP-A 0 435 372

Es ist bekannt, bei automatischen Fahrzeuggetrieben den Druck des Arbeitsmediums, welches zur Betätigung der Reibelemente des Getriebes dient, in Abhängigkeit von verschiedenen Betriebsparametern des Kraftfahrzeuges einzustellen. Bei dem in der DE-A 19 32 986 offenbarten Verfahren erfolgt dabei die Druckeinstellung über eine elektronische Steuerung über vorgegebene Druckkennlinien. Ein Ausgleich von Parameteränderungen infolge von Serienstreuungen oder Alterungseffekten kann dadurch nicht erreicht werden. Reibwerte von Lamellen, Kennlinien von Druckreglern oder Federn sowie das vom Motor abgegebene Moment sind jedoch diesen Streuungen ständig unterworfen, wodurch einerseits Schaltqualitätsschwankungen hervorgerufen werden, andererseits jedoch hohe Anforderungen an die Toleranzen der eingesetzten bzw. verwendeten Teile gestellt werden. Dies wirkt sich kostenmäßig sehr ungünstig aus.

Bei der in DE-A 32 05 767 offenbarten Ausführung wurden deshalb geschlossene Regelkreise verwendet. Bei diesen ist jedoch eine der notwendigen Dynamik Rechnung tragende Regelgröße erforderlich. Grundsätzlich sind bei der Regelstrecke Motor-Getriebe infolge der vorhandenen Totzeiten im gesamten Betriebsstrang Stabilitätsprobleme zu erwarten, und es müssen deshalb deutliche Regelabweichungen in Kauf genommen werden, bevor die Regelung korrigierend eingreifen kann, was sich in einem schlechten Schaltkomfort niederschlägt.

Aus der DE-A 30 25 054 ist ein Druckregler für eine automatische Getriebesteuerung für Fahrzeuge bekannt, bei der für den Gangwechsel in Abhängigkeit von der Last eine gewünschte Schaltzeit abgelegt ist. Die tatsächlich auftretende Schaltzeit wird gemessen und mit der gespeicherten Sollschaltzeit verglichen. Treten hierbei Abweichungen auf, wird in einem Korrekturregister ein Korrekturwert abgelegt, welcher bei einem Gangwechsel den Druckkennlinien, welche ursprünglich in einem Speicher abgelegt sind und dazu dienen, den Druck während des Gangwechsels zu steuern, hinzugefügt wird.

Bei einem Verfahren zur elektronischen Steuerung eines automatischen Fahrzeuggetriebes, wie in der EP-A 0 176 750 beschrieben, werden Korrekturwerte in Abhängigkeit der Last und Drehzahl errechnet und abgelegt, so daß eine exakte Anpassung an verschiedene Lastdrehzahlverhältnisse erfolgen kann. Die Soll- und die Istwerte für die charakterisierende Größe sowie die gebildeten Korrekturwerte werden in Lastdrehzahlkennfelder abgelegt, wobei die Istwerte durch Mittelwertbildung von Einzelwerten aus mehreren Schaltvorgängen gebildet werden, so daß bis zum Abschluß der Mittelwertbildung der vorherige Korrekturwert erhalten bleibt und nach Durchführung der Korrektur die Istwerte für die Mittelwertbildung bei Veränderung des Korrekturwertes auf die Sollwerte gesetzt werden.

In der EP-A 0 435 372 ist ein Verfahren zur Steuerung des Wechsels in einem Automatikgetriebe eines Fahrzeugs von einer verringert Drehmoment übertragenden fluiddruckbetriebenen Drehmomentenübertragungsvorrichtung beschrieben, welche einem niedrigeren Geschwindigkeitsverhältnis zugeordnet ist, zu einer zunehmend Drehmoment übertragenden fluiddruckbetriebenen Drehmomentübertragungseinrichtung, die einem höheren Geschwindigkeitsverhältnis zugeordnet ist, wenn die Motordrossel im wesentlichen geschlossen ist. Die abgehende Drehmomentübertragungsvorrichtung wird dabei gleichzeitig bzw. im wesentlichen gleichzeitig mit dem Eingriff der aufkommenden Drehmomentübertragungsvorrichtung außer Eingriff gebracht. Das Getriebe weist einen Eingang, einen Ausgang und eine Turbine auf, welche über den Eingang mit der Antriebsmaschine gekoppelt ist. Das in dieser Druckschrift beschriebene Verfahren umfaßt dabei die nachfolgend genannten Schritte Der Fülltrog wird an die aufkommende Drehmomentenübertragungsvorrichtung für eine FÜllzeit angelegt, um im wesentlichen die aufkommende Drehmomentübertragungsvorrichtung mit Betriebsfluid zu füllen. Das Turbinengeschwindigkeitshochziehen aufgrund eines anfänglichen Schlupfes der verringert Drehmoment übertragenden Drehmomentübertragungsvorrichtung wird nachgewiesen und eine Synchronisation der aufkommenden Drehmomentübetragungsvorrichtung auf der Grundlage der Turbinengeschwindigkeit und der Ausgangsgeschwindigkeit festgestellt und der Wechsel dann vollendet, wenn eine Synchronisation nachgewiesen wird. Dabei wird an die abgehende Drehmomentübertragungsvorrichtung für eine Zeit geringer als die Füllzeit ein niedrigerer Druck angelegt und dann die abgehende Drehmomentübertragungseinrichtung von Betriebsfluid entleert. Wenn eine Turbinengeschwindigkeitshochziehen nachgewiesen wird, erfolgt ein Durchlaufen einer Steuerschleife. Bei diesem Durchlauf wird dabei ein Schlupfprofil erstellt, welches den erwünschten Schlupf während des Durchlaufs repräsentiert. Der Schlupf der aufkommenden Drehmomentübertragungsvorrichtung wird gemessen und gesteuert, um den Schlupf der aufkommenden Drehmomentübertragungsvorrichtung auf der Grundlage des Schlupfgeschwindigkeitsprofils zu steuern.

Die bekannten Lösungen zur Beeinflussung der Schaltqualität in einem Automatgetriebe zeichnen sich im wesentlichen durch einen hohen steuerund regelungstechnischen Aufwand aus. Des weiteren ist bei einigen Varianten keine sofortige Beeinflussung der Schaltqualität möglich, aufgrund der ablaufenden Steuerstrategie. Des weiteren werden bei Automatgetrieben trotz Beeinflussung des Regeldruckes in Abhängigkeit von den ermittelten Fahrkennwerten hinsichtlich der Qualität nur unbefriedigende Schaltergebnisse erzielt.

Der Erfindung liegt deshalb die Aufgabe zugrunde, die genannten Nachteile zu vermeiden und eine einfache automatische bzw. selbstlernende Anpassung der Schaltvorgänge an unterschiedliche Betriebsbedingungen zu erzielen.

Die erfindungsgemäße Lösung der Aufgabe ist durch die Merkmale des Anspruchs 1 bzw. 8 charakterisiert. Vorteilhafte Ausführungen sind in den Unteransprüchen beschrieben.

Erfindungsgemäß wird bei Nichteinhaltung einer bestimmten vorgebbaren Zeit für den Beginn des Synchronisiervorganges oder einer definierten Motordrehzahländerung der Anfangsdruckwert zum Aufbringen der erforderlichen Anpreßkraft der kraftschlüssig miteinander koppelbaren Kuppfungsteile adaptiert. Bei diesen, in der Regel mechanisch übertragenden, asynchron schaltbaren Kupplungen sind mindestens zwei Reibflächen gegeneinander gepreßt, wodurch eine zur Drehmomentübertragung erforderliche Reibung entsteht. Für die Reibflächen selbst kommen dabei verschiedene geometrische Grundformen in Betracht, beispielsweise Reibscheiben-, Kegel- und Trommelkupplungen oder aber bei Parallelschaltung mehrerer Reibkörper, beispielsweise der Lamellenkupplung, zur Anwendung. Das bei diesen kraftschlüssig arbeitenden Kupplungen durch die Reibung übertragbare Drehmoment hängt dabei im wesentlichen neben der Anpreßkraft von der Reibungszahl sowie der Anzahl der Reibflächenpaare ab. Beim Schaltvorgang schaltbarer Reibungskupplung werden dabei Primärseite und Sekundärseite, d.h. Antriebs- und Abtriebsseite der Kupplung, über Reibflächen miteinander verbunden. Da sich die Reibungszahl µ während des Rutschvorganges infolge Schmiermitteleinwirkung und Erwärmung wesentlich verändert, tritt der theoretisch zu erwartende Verlauf des Drehmoments praktisch nicht ein. Dieser dient jedoch als Grundlage zur angenäherten Berechnung von Rutschzeit und Reibarbeit. Das Rutschmoment der Kupplung wirkt als Beschleunigungsmoment und muß auch das eventuell schon wirkende Nutzmoment aufbringen. Da die beim Schaltvorgang erforderliche Reibarbeit im wesentlichen auch in Wärmeenergie umgewandelt wird und damit zur Erwärmung der Kupplung führt, und damit die Reibflächen nicht infolge der sich einstellenden Temperaturen zerstört werden, sind Grenzwerte für die Dauer der Rutschzeit bei bestimmten Drehzahlen je Kupplungstyp und Größe vorgegeben. Eine zu lange Rutschzeit schlägt sich in einer erhöhten Belastung der Reibelemente nieder, was zu einer erhöhten Abnutzung und zu einem erhöhten Bedarf an Schaltkraft führt.

Erfindungsgemäß wird mit der Beeinflussung des Anfangsdruckwertes die Zeit zur Einstellung des Regeldruckwertes und damit auch die Zeit bis zu Beginn des Synchronisiervorganges beeinflußt. Dies ermöglicht es, einen bestimmten Gesamtzeitwert für den Schaltvorgang einzuhalten und gleichzeitig auch die Qualität der Schaltung wesentlich zu verbessern. Die erfindungsgemäße Adaption des Anfangsdruckwertes ermöglicht es, die Lamellenbelastung gering zu halten.

Beim erstmaligen Betrieb werden dabei vorzugsweise für die ersten Schaltungen ca. doppelt so hohe Druckkorrekturwerte verwendet. Dies gewährleistet eine rasche Anpassung der Schaltdruckverläufe an das Fahrzeug und die Fahrbedingungen. Die Korrekturwerte selbst können dabei im RAM oder bei größeren Abweichungen vom aktuell gespeicherten Wert auch im EEPROM gespeichert werden. Dies bedeutet, daß auch nach dem Ausschalten der Zündung die letzten Druckkorrekturwerte erhalten bleiben. Des weiteren besteht die Möglichkeit, bei Fehlern in der Sensorik, z.B. im Drehzahlsensor oder Lastgeber, die Adaption zu sperren. Die Schaltung kann dann mit den im EEPROM abgelegten Steuerdruckkennfeldem durchgeführt werden.

Wesentliche Vorteile beim Einsatz der erfindungsgemäßen Adaption bestehen darin, daß die Steuergeräte getriebeunabhängig sind und eine Anpassung, welche wirtschaftlich sehr aufwendig ist, am Prüfstand entfallen kann. Des weiteren kann durch Berücksichtigung von Getriebe-, Motor- und Fahrzeugparametem eine verbesserte Schaltqualität in Verbindung mit dem Einhalten einer vorgegebenen Zeit bis zum Synchronisiervorgang für jede Lastgeberstellung ermöglicht werden.

Die Adaption ermöglicht eine gleichbleibende Schaltqualität über die gesamte Lebensdauer des Getriebes trotz veränderlicher Betriebsbedingungen.

Die erfindungsgemäße Lösung wird nachfolgend anhand einer Figur erläutert.

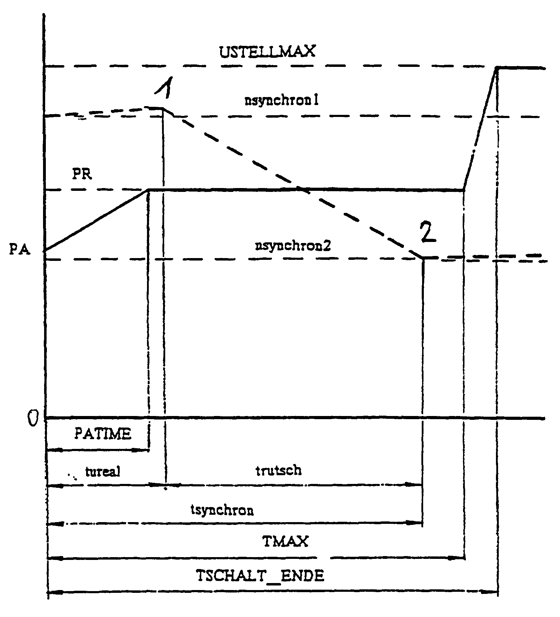

Die Figur verdeutlicht schematisch eine Steuerdruckkennlinie für Hoch- und Rückschaltungen in einem mechanischen Getriebe. Dazu ist der Druckverlauf über der Zeit in einem Diagramm aufgetragen. Die einzelnen Werte sind wie folgt bezeichnet:
- USTELLMAX =: Betriebsdruck
- PR =: berechneter Regeldruck
- PA =: Anfangsdruckwert
- PATIME =: Zeit, in welcher der Anfangsdruckwert auf den Regeldruckwert linear oder degressiv ansteigt oder abfällt
- TMAX =: Zeit, nach der der Sicherheitsdruckhochlauf beginnt und nach deren Ablauf der Synchronisiervorgang abgeschlossen sein sollte
- TSCHALT-ENDE =: Zeit, nach der der Betriebsdruck anliegt.

Für den Schaltvorgang sind des weiteren folgende Meß- und Regelgrößen wesentlich:
- n_{SYNCHRON 1} =: Motordrehzahl bei Beginn des Schaltvorganges
- n_{SYNCHRON 2} =: Motordrehzahl nach Beendigung des Schaltvorganges
- t_{UREAL} =: Zeit bis zu Beginn des Synchronisiervorganges
- t_{RUTSCH} =: Rutschzeit der Lamellen
- t_{SYNCHRON} =: Zeit, nach der der Schaltvorgang abgeschlossen wurde.

Dem Diagramm ist zu entnehmen, daß nach dem Auftreten eines Gangschaltsignales, in der Zeitachse zum Zeitpunkt 0, die Motordrehzahl n1 noch bis zum Erreichen eines Freilaufpunktes, hier dem Punkt 1 ansteigt, worunter man den Punkt versteht, an dem die dem neuen Gang zugeordneten Reibelemente Moment übernehmen und die dem alten Gang zugeordneten Reibelemente lösen. Ab diesem Freilaufpunkt beginnt die Motordrehzahl n1 abzusinken, während gleichzeitig die Reibelemente schleifen. Die Zeit bis zum Erreichen dieses Freilaufpunktes, der dem Beginn des Synchronisationsvorganges entspricht, ist mit t_{UREAL} bezeichnet. An diese schließt sich die Rutschzeit der Reibelemente t_{RUTSCH} an.

Im Punkt 2 im Diagramm laufen beide Reibelemente synchron, der neue Gang ist eingelegt, die Reibelemente haften und die beiden Drehzahlen sind entweder gleich oder entsprechend dem Stufensprung identisch.

Der Schaltkomfort ist durch den Verlauf des Abtriebsmomentes bestimmt. Der Momentensprung zum Zeitpunkt t_{SYNCHRON} soll möglichst gering sein.

Der einzuhaltende Sollwert für den Schaltvorgang ist die Zeit bis zum Beginn des Synchronisationsvorganges t_{UREAL}. Die Stellgröße zur Beeinflussung dieses Zeitraumes ist der Anfangsdruckwert PA, das Stellglied eine Einrichtung zum Aufbringen des Anfangsdruckes. Zur Durchführung einer adaptiven Regelung werden die Sollwerte für die Zeit bis zum Beginn des Synchronisationsvorganges t_{UREAL} beispielsweise in einem Last/Drehzahlkennfeld abgelegt. Dabei kann prinzipiell die Rasterung für die Last- und Drehzahlklassen beliebig gewählt werden, wobei die Sollwerte in einem Festwertspeicher in einer elektronischen Getriebesteuereinheit gespeichert werden können. Des weiteren sind Meßeinrichtungen vorgesehen, welche die aktuelle Zeit bei jedem Schaltvorgang bis zu Beginn des Synchronisationsvorganges ermitteln. Als weitere Einflußparameter werden das Drehmoment je Lastgeberstellung, die Drehzahl beim Schalten sowie das Massenträgheitsmoment der einzelnen Komponenten berücksichtigt. Weicht der gemessene bzw. ermittelte Istwert vom Sollwert ab, wird ein Korrekturwert am Ausgang der Steuereinrichtung ausgegeben und an der Druckeinheit wirksam. Die Stellgröße PA ändert sich um den Korrekturwert. Der geänderte Anfangsdruckwert wird dann abgespeichert.

Eine Änderung der Stellgröße um einen festen Korrekturwert ist additativ oder multiplikativ möglich.

Andere Konzepte der Anpassung der Zeit bis zum Beginn des Synchronisationsvorganges durch Änderung des Anfangsdruckwertes sind ebenfalls denkbar. Die erfindungsgemäße Lösung ermöglicht jedoch ein sehr vereinfachtes Steuerkonzept.

Für den Anfangsdruckwert PA können ein oberer und ein unterer Grenzwert festgelegt werden, welche nicht überschritten bzw. unterschritten werden dürfen. Des weiteren kann eine bestimmte Größe der Abweichung zwischen Ist- und Sollwert als Signal für das Erfordernis einer Auswechselung der Lamellen angesehen werden.

Des weiteren besteht die Möglichkeit, die Schaltkonzeption dahingehend zu gestalten, daß auch der Regeldruck adaptiert und damit die mögliche Rutschzeit beeinflußt werden kann.
In diesem Fall kann festgelegt werden, daß die Regeldruckwertadaption Vorrang vor der Anfangsdruckwertadaption besitzt oder umgekehrt.

## Patentansprüche

1. Verfahren zum Betreiben eines Fahrzeuggetriebes mit vorzugsweise elektrohydraulisch betätigbaren Reibelementen zur Umschaltung zwischen verschiedenen Übersetzungsstufen, in einem Fahrzeug mit mindestens noch einer Antriebsmaschine, bei welchem
1.1 ein aktueller Istwert wenigstens einer den Schaltvorgang charakterisierenden Größe (Tᵤᵣₑₐₗ) bei jedem Schaltvorgang ermittelt wird, 1.2 der Istwert mit einem festlegbaren und speicherbaren Sollwert verglichen wird,
1.3 bei Abweichung des Istwertes vom Sollwert eine Stellgröße zur wenigstens mittelbaren Beeinflussung des Istwertes um einen festlegbaren Korrekturwert geändert wird,
**gekennzeichnet durch** folgende Merkmale:
1.4 nach Auftreten eines Gangschaltsignals wird ein Steuerdruck zum Aufbringen einer erforderlichen Anpresskraft kraftschlüssig zu koppelnder Kupplungsteile ausgehend von einem abgespeicherten Anfangsdruckwert (PA) derart gesteuert, daß er linear oder degressiv auf einen Regeldruckwert (PR) ansteigt oder abfällt;
1.5 bei jedem Schaltvorgang wird die Zeitdauer (Tᵤᵣₑₐₗ) vom Auftreten (0) des Gangschaltsignales bis zum Beginn des Synchronisationsvorganges als Istwert der den Schaltvorgang charakterisierenden Größe ermittelt,
1.6. die Zeitdauer (Tᵤᵣₑₐₗ) wird mit einem vorgegebenen Sollzeitraum als Sollwert verglichen, und
1.7. bei Abweichung der Zeitdauer (Tᵤᵣₑₐₗ) vom vorgegebenen Sollzeitraum wird der abgespeicherte Anfangsdruckwert (P_{A}) um den Korrekturwert verändert.

2. Verfahren nach Anspruch 1, **dadurch gekennzeichnet, dass** der Anfangsdruckwert (PA) zum Aufbringen der erforderlichen Anpresskraft der kraftschlüssig miteinander koppelbaren Kupplungsteile sukzesive um den Korrekturwert verändert wird.

3. Verfahren nach Anspruch 1, **dadurch gekennzeichnet, dass** die Änderung des Anfangsdruckwertes (PA) jeweils um einen festen Korrekturwert erfolgt und der damit sich neu einstellende Anfangsdruckwert (PA) für gleiche Randbedingungen gespeichert wird.

4. Verfahren nach einem der Ansprüche 1 bis 3, **gekennzeichnet durch** folgende Merkmale:
4.1 bei jedem Schaltvorgang wird die Rutschzeit (t_{RUTSCH}) der kraftschlüssig miteinander koppelbaren Kupplungsteile als ein weiterer Istwert, der den Schaltvorgang charakterisierenden Größe ermittelt,
4.2 der weitere Istwert wird mit einem festlegbaren und speicherbaren Sollwert verglichen;
4.3 bei Abweichung des Istwertes vom Sollwert wird der Regeldruckwert (PR) als eine Stellgröße zur wenigstens mittelbaren Beeinflussung der Rutschzeit (t_{RUTSCH}) adaptiert.

5. Verfahren nach Anspruch 4, **dadurch gekennzeichnet, dass** der Regeldruckwert (PR) um einen festlegbaren Korrekturwert adaptiert wird.

6. Verfahren nach einem der Ansprüche 4 oder 5, **dadurch gekennzeichnet, dass** die Änderung des Regeldruckwertes (PR) Vorrang vor der Änderung des Anfangsdruckwertes (PA) besitzt.

7. Verfahren nach einem der Ansprüche 4 oder 5, **dadurch gekennzeichnet, dass** die Änderung des Anfangsdruckwertes (PA) Vorrang vor der Änderung des Regeldruckwertes (PR) besitzt.

8. Steuer- und Regelsystem zur Durchführung des Verfahrens gemäß einem der Ansprüche 1 bis 7 für ein Getriebe, insbesondere Fahrzeuggetriebe mit wenigstens einer Einrichtung zum Aufbringen der zum Betätigen und Aneinanderpressen von Reibelementen zur Umschaltung zwischen verschiedenen Übersetzungsstufen für ein Fahrzeug mit mindestens einer Antriebsmaschine erforderlichen Kraft mittels einem Druckmittel;
8.1 mit einer Steuervorrichtung;
8.2 die Steuervorrichtung weist wenigstens einen ersten Eingang und einen ersten Ausgang auf;
8.3 es ist wenigstens eine Erfassungseinrichtung für die Ermittlung eines Istwertes einer den Schaltvorgang charakterisierenden Größe bei jedem Schaltvorgang vorgesehen, welche mit dem Eingang der Regelvorrichtung gekoppelt ist;
8.4 das Stellglied ist von der Einrichtung zur Erzeugung der Anpresskraft gebildet und ist mit dem Ausgang der Regeleinrichtung gekoppelt;
8.5 die Steuervorrichtung umfasst mindestens eine Vergleichseinrichtung zum Vergleich des Istwertes mit einem festlegbaren und gespeicherten Sollwert;
8.6 die Steuervorrichtung umfasst eine Einrichtung zur Änderung einer Stellgröße bei Abweichung des Istwertes vom Sollwert zur wenigstens mittelbaren Beeinflussung um einen festlegbaren Korrekturwert;
8.7 die Erfassungseinrichtung umfasst eine Zeitmesseinrichtung, welche die Zeitdauer (tᵤᵣₑₐₗ) vom Abgeben eines Gangschaltsignales bis zum Beginn des Synchronisationsvorganges als eine den Schaltvorgang charakterisierende Größe ermittelt;
8.8 die Stellgröße ist der Anfangsdruckwert (PA), wobei dieser der beim Abgeben eines Gangschaltsignales für die Reibelemente bereitgestellte Druck ist;
8.9 bei Abweichung der Zeitdauer (tᵤᵣₑₐₗ) vom Abgeben eines Gangschaltsignales bis zum Beginn des Synchronisiervorganges von einem vorgebenen Sollzeitraum wird der Anfangsdruckwert (PA) zum Aufbringen der erforderlichen Anpresskraft der kraftschlüssig miteinander koppelbaren Kupplungsteile um den Korrekturwert verändert.

## Claims

1. Method of operating a vehicle transmission having preferably electrohydraulically actuable friction elements for the shift between different ratio steps, in a vehicle having at least one more driving engine, whereby
1.1 an actual value of at least one variable (Tᵤᵣₑₐₗ) characterising the shift operation is determined during each shift operation,
1.2 the actual value is compared with a definable and storable setpoint value,
1.3 in the event of deviation of the actual value from the setpoint value, a manipulated variable for at least indirectly influencing the actual value is altered by a definable correction value,
**characterised by** the following features:
1.4 after the occurrence of a gear shift signal a control pressure for summoning up a necessary application force of clutch parts to be coupled in a friction-locked manner is controlled from a stored initial pressure value (PA) in such a way that it rises or falls linearly or degressively to a regulating pressure value (PR);
1.5 during each shift operation, the period (Tᵤᵣₑₐₗ) from the occurrence (0) of the gear shift signal up to the start of the synchronising operation is determined as an actual value of the variable characterising the shift operation,
1.6 the period (Tᵤᵣₑₐₗ) is compared with a preselected setpoint period as a setpoint value, and 1.7 in the event of deviation of the period (Tᵤᵣₑₐₗ) from the preselected setpoint period, the stored initial pressure value (P_{A}) is varied by the correction value after the shift operation.

2. Method according to claim 1, **characterised in that** the initial pressure value (PA) for summoning up the necessary application force of the clutch parts, which may be coupled in a friction-locked manner to one another, is varied successively by the correction value.

3. Method according to claim 1, **characterised in that** the alteration of the initial pressure value (PA) is effected in each case by a fixed correction value and the, hence, newly arising initial pressure value (PA) is stored for identical marginal conditions.

4. Method according to one of claims 1 to 3, **characterised by** the following features:
4.1 during each shift operation the slipping time (t_{RUTSCH}) of the clutch parts, which may be coupled in a friction-locked manner to one another, is determined as a further actual value of the variable characterising the shift operation;
4.2 the further actual value is compared with a definable and storable setpoint value;
4.3 in the event of deviation of the actual value from the setpoint value, the regulating pressure value (PR) is adapted as a manipulated variable for at least indirect influencing of the slipping time (t_{RUTSCH}).

5. Method according to claim 4, **characterised in that** the regulating pressure value (PR) is adapted by a definable correction value.

6. Method according to one of claims 4 or 5, **characterised in that** the alteration of the regulating pressure value (PR) has priority over the alteration of the initial pressure value (PA).

7. Method according to one of claims 4 or 5, **characterised in that** the alteration of the initial pressure value (PA) has priority over the alteration of the regulating pressure value (PR).

8. Control and regulating system for effecting the method according to one of claims 1 to 7 for a transmission, in particular a vehicle transmission having at least one device for summoning up, by means of a pressure medium, the force needed to actuate and press together friction elements for the shift between different ratio steps for a vehicle having at least one driving engine;
8.1 having a control apparatus;
8.2 the control apparatus comprises at least one first input and one first output;
8.3 at least one detection device for determining during each shift operation an actual value of a variable characterising the shift operation is provided, which is coupled to the input of the regulating apparatus;
8.4 the actuator is formed by the device for generating the application force and is coupled to the output of the regulating device;
8.5 the control apparatus comprises at least one comparison device for comparing the actual value with a definable and stored setpoint value;
8.6 the control apparatus comprises a device for altering a manipulated variable by a definable correction value in the event of deviation of the actual value from the setpoint value for at least indirect influencing;
8.7 the detection device comprises a time measuring device, which determines the period (tᵤᵣₑₐₗ) from the supplying of the gear shift signal up to the start of the synchronising operation as a variable characterising the shift operation;
8.8 the manipulated variable is the initial pressure value (PA), wherein the latter is the pressure provided for the friction elements upon supply of a gear shift signal;
8.9 in the event that the period (tᵤᵣₑₐₗ) from supply of a gear shift signal up to the start of the synchronising operation deviates from a preselected setpoint period, the initial pressure value (PA) for summoning up the necessary application force of the clutch parts, which may be coupled in a friction-locked manner to one another, is varied by the correction value.

## Revendications

1. Procédé de mise en oeuvre d'une boîte de vitesses de véhicule avec des éléments à friction actionnables électrohydrauliquement pour la commutation entre divers rapports dans un véhicule avec, en outre au moins une machine motrice, où
1.1 une valeur réelle actuelle d'une grandeur (Tᵤᵣₑₐₗ) caractérisante du processus de commutation est élaborée pour chaque processus de commutation
1.2 la valeur réelle est comparée à une valeur de consigne déterminable et mémorisable,
1.3 en cas d'écart entre la valeur réelle et la valeur de consigne une grandeur de réglage pour action au moins indirecte sur la valeur réelle est modifiée d'une valeur de correction déterminable,
**caractérisé par** les particularités suivantes :
1.4 après apparition d'un signal de changement de rapport on provoque une pression de commande pour la production d'une force de serrage requise pour les éléments d'accouplement à accoupler, en partant d'une valeur de pression initiale mémorisée de telle sorte que cette pression augmente ou diminue linéairement ou de façon dégressive jusqu'à une valeur de pression de réglage (PR) ;
1.5 dans chaque processus de commutation on élabore la durée (Tᵤᵣₑₐₗ) allant de l'instant (O) d'arrivée du signal de commutation jusqu'au début du processus de synchronisation comme valeur réelle de la grandeur caractérisante du processus de commutation,
1.6 la durée (Tᵤᵣₑₐₗ) est comparée à un intervalle de temps prédéterminé comme valeur de consigne, et
1.7 en cas d'écart entre la durée (Tᵤᵣₑₐₗ) et l'intervalle de temps prédéterminé, valeur de consigne, la valeur de pression initiale mémorisée (PA) est modifiée de la valeur de correction.

2. Procédé selon la revendication 1 **caractérisé en ce que** la valeur de pression initiale (PA) pour la production de la force requise de serrage des organes d'accouplement à accoupler par action de force' se trouve modifiée successivement de la valeur de correction.

3. Procédé selon la revendication 1 **caractérisé en ce que** la modification de la valeur de pression initiale (PA) s'effectue chaque fois d'une valeur de correction fixe et qu'ainsi la nouvelle valeur de pression initiale (PA) nouvellement établie est mémorisée pour d'égales conditions limites.

4. Procédé selon l'une des revendications 1 à 3
**caractérisé par** les particularités suivantes :
4.1 à chaque processus de commutation on détermine le temps de glissement (t_{RUTSCH}) des organes d'accouplement adaptés à s'accoupler par action de force comme une autre valeur réelle de la grandeur caractérisante du processus,
4.2 cette autre valeur réelle est comparée à une valeur de consigne déterminable et mémorisable ;
4.3 en cas d'écart entre la valeur réelle et la valeur de consigne, on adapte le niveau de pression de réglage (PR) comme une grandeur de réglage pour modification au moins indirecte du temps de glissement (t_{RUTSCH}).

5. Procédé selon la revendication 4 **caractérisé en ce que** le niveau de pression de réglage (PR) est adapté d'une valeur de correction déterminable.

6. Procédé selon la revendication 4 ou 5 **caractérisé en ce que** la modification du niveau de pression de réglage (PR) a priorité sur la modification du niveau de pression initiale (PA).

7. Procédé selon la revendication 4 ou 5 **caractérisé en ce que** la modification du niveau de pression initiale (PA) a priorité sur la modification du niveau de pression de réglage (PR).

8. Système de commutation et de réglage par l'exécution du procédé selon les revendications 1 à 7 pour une boîte de vitesses, en particulier boîte de vitesses de véhicule avec au moins un dispositif pour la production, au moyen d'un moyen de pression de la force nécessaire pour l'actionnement et le serrage les uns contre les autres d'éléments de frottement pour la commutation entre divers rapports de transmission pour un véhicule équipé au moins d'une machine motrice ;
8.1 avec un dispositif de commande ;
8.2 le dispositif de commande comporte au moins une première entrée et une première sortie ;
8.3 il est prévu pour chaque processus de commutation un dispositif de saisie pour la constatation d'une valeur réelle d'une grandeur caractérisant le processus de commutation lequel est accouplé avec l'entrée du dispositif de réglage ;
8.4 l'organe de réglage est formé par le dispositif de production de la force de serrage et il est accouplé à la sortie du dispositif de réglage ;
8.5 le dispositif de commande comprend au moins un dispositif comparateur pour comparaison de la valeur réelle à une valeur de consigne déterminable et mémorisable ;
8.6 le dispositif de commande comprend un agencement pour la modification d'une grandeur de réglage en cas d'écart de la valeur réelle par rapport à la valeur de consigne en vue de modifier au moins indirectement d'une valeur de correction déterminable une grandeur de réglage ;
8.7 l'agencement de saisie comporte un dispositif de mesure de temps qui détermine la durée entre la délivrance d'un signal de commutation et le début du processus de synchronisation (tᵤᵣₑₐₗ) comme une grandeur caractérisant le processus de commutation ;
8.8 la grandeur de réglage est la valeur de pression initiale (PA) celle-ci étant le niveau de pression rendu disponible à la délivrance d'un signal de commutation pour les éléments de frottement ;
8.9 en cas d'écart de la durée allant jusqu'au début du processus de synchronisation (tᵤᵣₑₐₗ) à partir de la délivrance d'un signal de commutation par rapport à l'intervalle de temps prédéterminé de consigne, la valeur de pression initiale (PA) pour la production de la force de serrage requise des organes d'accouplement accouplables par action de force entre eux est modifiée de la valeur de correction.
